# EUROPÄISCHE PATENTSCHRIFT

(11) **EP 3 362 336 B1**
(45) Veröffentlichungstag und Bekanntmachung des Hinweises auf die Patenterteilung: **25.12.2019**
(21) Anmeldenummer: 16774910.0
(22) Anmeldetag: 27.09.2016
(51) Int. Cl.: B62D 25/20, B62D 27/02

(54) **VERBINDUNGSANORDNUNG VON ZWEI KAROSSERIEBAUTEILEN UND VERFAHREN ZUR HERSTELLUNG EINES BLECHBAUTEILS MIT GEDOPPELTEM FÜGEFLANSCH**
ARRANGEMENT FOR CONNECTING TWO VEHICLE BODY COMPONENTS AND METHOD FOR PRODUCING A SHEET METAL COMPONENT HAVING A DOUBLED JOINING FLANGE
SYSTÈME D'ASSEMBLAGE DE DEUX ÉLÉMENTS DE CARROSSERIE ET PROCÉDÉ DE FABRICATION D'UN ÉLÉMENT EN TÔLE MUNI D'UNE BRIDE D'ASSEMBLAGE DOUBLÉE

(30) Priorität: 12.10.2015 DE 102015219694
(43) Veröffentlichungstag der Anmeldung: 22.08.2018
(73) Patentinhaber: Bayerische Motoren Werke Aktiengesellschaft, 80809 München (DE)
(72) Erfinder: WIMMER, Thomas, 85386 Eching (DE); LANG, Martin, 82402 Seeshaupt (DE); LINDNER, Werner, 85254 Sulzemoos (DE)
(86) Internationale Anmeldenummer: PCT/EP2016/072889
(87) Internationale Veröffentlichungsnummer: WO 2017/063859

(56) Entgegenhaltungen:
- DE-A1-102010 004 283
- US-A- 2 782 495
- US-A- 4 187 407
- US-A- 5 487 803
- US-A1- 2006 043 774

## Beschreibung

Die Erfindung betrifft eine Verbindungsanordnung von zwei Karosseriebauteilen, bei welcher das eine Karosseriebauteil bzw. das erste Karosseriebauteil als Blechbauteil mit einem Fügeflansch ausgebildet und an diesem Fügeflansch mit dem anderen Karosseriebauteil bzw. dem zweiten Karosseriebauteil mittels Schweißverbindung verbunden ist.

Die Erfindung betrifft ferner ein Verfahren zur Herstellung eines mit einem Fügeflansch ausgebildeten Blechbauteils.

Die DE 10 2013 113 164 A1 beschreibt eine Schwellerbaugruppe mit einem Schwellerinnenteil, das mit einem Bodenblech verbunden ist. Das Bodenblech ist mit einem Fügeflansch ausgebildet. Die DE 10 2014 200 598 B3 beschreibt einen Schweller, der an eine Bodengruppe angebunden ist. Die Bodengruppe ist mit einem Fügeflansch ausgebildet. DE102010004283 offenbart auch eine ähnliche Schwellerbaugruppe.

Typischerweise ist das Bodenblech bzw. die Bodengruppe an ihrem Fügeflansch mittels Schweißverbindung gefügt. Unter Last und insbesondere im Crashfall müssen über diese Schweißverbindung hohe Kräfte übertragen werden. Dies kann bspw. durch geeignete Lasernahtführung, dicke Bodenbleche und/oder hochfeste Bodenblechwerkstoffe erreicht werden. Diese Maßnahmen sind allerdings kostenintensiv und/oder mit Mehrgewicht verbunden.

Aufgabe der Erfindung ist es, eine Verbindungsanordnung betreffender Art anzugeben, die ohne nennenswertes Mehrgewicht wirtschaftlich herstellbar ist. Diese Aufgabe wird gelöst durch eine erfindungsgemäße Verbindungsanordnung entsprechend den Merkmalen des Patentanspruchs 1. Mit einem nebengeordneten Patentanspruch erstreckt sich die Erfindung auch auf ein Verfahren zur Herstellung eines Blechbauteils, das im Weiteren für die Verwendung in einer bzw. zur Herstellung einer erfindungsgemäßen Verbindungsanordnung geeignet ist. Bevorzugte Weiterbildungen und Ausgestaltungen der Erfindung ergeben sich analog für beide Erfindungsgegenstände aus den abhängigen Patentansprüchen, der nachfolgenden Beschreibung und den Figuren.

Die erfindungsgemäße Verbindungsanordnung zeichnet sich dadurch aus, dass der Fügeflansch am ersten, als Blechbauteil ausgebildeten Karosseriebauteil einen umgeschlagenen Rand aufweist und somit, zumindest im Bereich der Schweißverbindung, doppelte Blechdicke aufweist. Ein solcher Fügeflansch kann auch als gedoppelter Fügeflansch bezeichnet werden.

Durch den umgeschlagenen Rand weist das erste Karosseriebauteil der erfindungsgemäßen Verbindungsanordnung lokal an seinem Fügeflansch eine doppelte Blechdicke auf und kann dadurch entlang der Schweißverbindung hohe Kräfte aufnehmen bzw. übertragen. Bevorzugt durchdringt die Schweißverbindung die beiden aufeinanderliegenden Blechlagen des Fügeflanschs, wodurch einerseits die Schweißverbindung besonders belastbar ist und andererseits die beiden Blechlagen stoffschlüssig zusammengehalten werden. Ferner ergeben sich Vorteile beim Herstellen der Schweißverbindung, bspw. durch eine verbesserte Wärmeableitung. Im Bereich der Schweißverbindung ist somit eine hohe Belastbarkeit gewährleistet. Das betreffende Karosserie- bzw. Blechbauteil kann daher unter Umständen aus einem vergleichsweise dünnen und/oder niedrigfesten bzw. weichen (und somit gut umformbaren) Blechmaterial hergestellt werden, was im Hinblick auf Gewicht und wirtschaftliche Herstellbarkeit vorteilig ist.

Bei der Schweißverbindung handelt es sich bevorzugt um eine Punktschweißverbindung mit mehreren Schweißpunkten, die insbesondere entlang des gedoppelten Fügeflanschs verteilt angeordnet sind. Bevorzugt durchdringen die Schweißpunkte beide aufeinanderliegenden Blechlagen des Fügeflanschs, wie obenstehend bereits erläutert. Das Punktschweißen ist, insbesondere im Vergleich zum Nahtschweißen, ein schnelles und kostengünstiges Fügeverfahren. Zudem ist häufig eine bessere punktuelle Zugänglichkeit zur Schweißstelle gegeben. Durch die doppelte Blechdicke am Fügeflansch des ersten Karosseriebauteils können die Schweißpunkte, insbesondere im Crashfall, hohe Kräfte übertragen. Ferner wird durch die doppelte Blechdicke im Fügeflansch ein sogenanntes Ausknöpfen der Schweißpunkte erschwert.

Bevorzugt weist das erste Karosseriebauteil bzw. Blechbauteil eine im Wesentlichen gleichmäßige bzw. homogene Blechdicke von nicht mehr als 1,2 mm, bevorzugt von nicht mehr als 1,0 mm und insbesondere von nicht mehr als 0,8 mm auf. Mit "im Wesentlichen" ist dabei gemeint, dass aufgrund einer umformenden Herstellung dieses Blechbauteils geringe Blechdickenschwankungen vorhanden sein können. Entsprechend weist der Fügeflansch doppelte Dicke (d. h. 2,4 mm, 2,0 mm bzw. 1,6 mm) auf. Bei dem Blechmaterial bzw. -werkstoff handelt es sich insbesondere um ein Stahlblech. Bevorzugt ist ferner vorgesehen, dass das erste Karosseriebauteil bzw. dessen Blechmaterial eine im Wesentlichen homogene Festigkeit bzw. Härte aufweist. Mit "im Wesentlichen" ist dabei gemeint, dass aufgrund einer umformenden Herstellung dieses Blechbauteils lokal unterschiedliche Festigkeiten vorhanden sein können. Bevorzugt wird das Blechmaterial nicht, auch nicht lokal, gehärtet (bspw. pressgehärtet) und ist somit ungehärtet.

Bevorzugt ist das erste Karosseriebauteil einstückig aus einem Blechmaterial, d. h. aus einem einzelnen Blechstück, hergestellt, insbesondere durch Umformen einer monolithischen Blechplatine. Damit ist insbesondere gemeint, dass das erste Karosseriebauteil nicht aus einer sogenannten Tailored Welded Blank hergestellt ist.

Der durch den umgeschlagenen Rand gebildete Fügeflansch am ersten Karosseriebauteil weist bevorzugt eine Breite von 20 mm bis 50 mm und insbesondere von 30 mm bis 40 mm auf.

Die Schweißverbindung, d. h. die Schweißnaht oder die Schweißpunkte, ist bevorzugt möglichst nahe an der Biegekante (Falzkante) des umgeschlagenen Rands ausgebildet. Damit ist insbesondere gemeint, dass die Schweißverbindung nicht mehr als 10 mm, bevorzugt nicht mehr als 7,5 mm, von der Biegekante des umgeschlagenen Rands am ersten Karosseriebauteil entfernt ist. Beim Schweißen und insbesondere beim Punktschweißen mittels Elektroden werden die im Fügeflansch aufeinanderliegenden Blechlagen nochmalig entlang der Biegekante zusammengepresst, was die finale Ausbildung eines kleinen Kantenradius an der Biegekante begünstigt.

Am ersten Karosseriebauteil ist der umgeschlagene Rand bevorzugt nach innen umgeschlagen. Die Schnittkante bzw. der Schnittrand ist dadurch vor äußeren korrosiven Einwirkungen geschützt, so dass in der Regel keine weiteren Maßnahmen zum Schutz der Schnittkante vor Kantenkorrosion erforderlich sind.

Die im Fügeflansch des ersten Karosseriebauteils aufeinanderliegenden Blechlagen können zusätzlich miteinander verklebt sein. Hierfür kann bspw. ein wärmeaushärtender Klebstoff verwendet werden, der dann z. B. während eines KTL-Prozesses aushärtet.

Bei dem ersten Karosseriebauteil handelt es sich bevorzugt um ein Bodenblech und bei dem anderen bzw. dem zweiten Karosseriebauteil um einen Schweller (Seitenschweller) bzw. ein Schwellerbauteil. Der Schweller kann aus mehreren Einzelteilen, insbesondere Blechbauteilen, gebildet sein. Bei dem Bodenblech handelt es sich insbesondere um ein räumlich geformtes Blechformteil, das bspw. mit dem nachfolgend beschriebenen erfindungsgemäßen Verfahren hergestellt ist.

Das erfindungsgemäße Verfahren zur Herstellung eines Blechbauteils bzw. Blechformteils mit wenigstens einem Fügeflansch, welcher einen umgeschlagenen Rand aufweist und dadurch mit doppelter Blechdicke ausgebildet ist, zeichnet sich dadurch aus, dass das Blechbauteil ausgehend von einer ebenen Platine (oder einem Blechband) vollständig, d. h. verbau- bzw. fügefertig, in einer Pressenstraße (oder Stufenpresse oder dergleichen) hergestellt wird. Das Blechwerkstück durchläuft die einzelnen Stufen der Pressenstraße und wird dabei schrittweise zu einem räumlich geformten Karosserieblechbauteil, insbesondere einem Bodenblech, mit entsprechend ausgebildetem Fügeflansch umgeformt. Im einzelnen kann es sich dabei um folgende Schritte handeln: Umformen, Beschneiden, Aufdoppeln des Fügeflanschs durch Aufstellen und Umbiegen des Rands, Nachformen und Endbeschneiden. Bevorzugt erfolgt das Umbiegen des zuvor aufgestellten Rands mithilfe wenigstens eines im betreffenden Pressenwerkzeug integrierten Drehschiebers, der beim Schließen dieses Pressenwerkzeugs den aufgestellten Rand mit möglichst kleinem Biegeradius umschlagartig umbiegt bzw. umlegt.

Die Herstellung dieses Blechbauteils bzw. Blechformteils kann direkt bei einem OEM oder auch bei einem Zulieferer erfolgen. Das hergestellte Blechformteil kann anschließend an seinem aufgedoppelten Fügeflansch mit einem anderen Karosseriebauteil gefügt werden.

Die Erfindung wird nachfolgend beispielhaft und in nicht einschränkender Weise mit Bezug auf die Figuren näher erläutert. Die in den Figuren gezeigten und/oder nachfolgend erläuterten Merkmale können allgemeine Merkmale der Erfindung sein und die Erfindung weiterbilden.
- Fig. 1: zeigt in einer Schnittansicht einen Bauteilverbund aus mehreren Karosseriebauteilen mit einer erfindungsgemäßen Verbindungsanordnung.
- Fig. 2: zeigt in mehreren Schnittdarstellungen die Herstellung eines Fügeflanschs an einem zum Bauteilverbund der Fig. 1 gehörenden Karosseriebauteil.

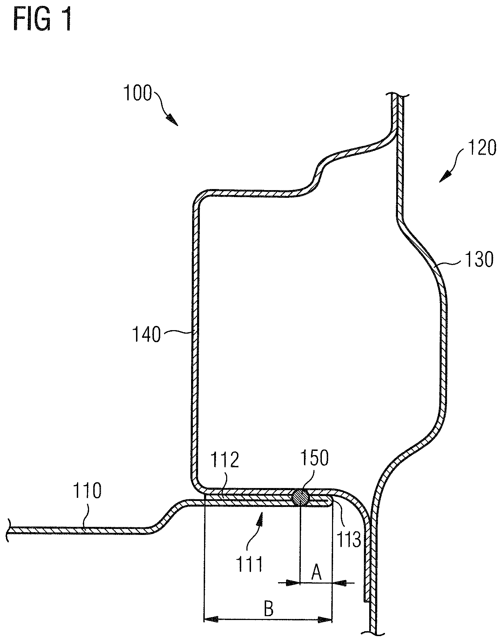

Fig. 1 zeigt einen Bauteilverbund 100 zwischen einem Bodenblech 110 und einem Schweller 120. Der Schweller 120 ist aus einem Außenteil 130 und einem Innenverstärkungsteil 140 gebildet. Bei allen Karosseriebauteilen 110, 130 und 140 handelt es sich um Blechbauteile und insbesondere um Blechformteile. Das Innenverstärkungsteil 140 (zweites Karosseriebauteil) und das daran angebundene Bodenblech 110 (erstes Karosseriebauteil) bilden eine erfindungsgemäße Verbindungsanordnung. Das Bodenblech 110 weist einen Fügeflansch 111 auf, an dem dieses mit dem Innenverstärkungsteil 140 mittels Punktschweißverbindungen 150 verbunden ist.

Erfindungsgemäß ist vorgesehen, dass der Fügeflansch 111 am Bodenblech 110 einen umgeschlagenen bzw. um 180° umgelegten Rand 112 aufweist und somit der Fügeflansch 111 mit doppelter Blechdicke ausgebildet ist. Das Bodenblech 110 ist bspw. aus einem Blechmaterial (Stahlblech) mit einer Blechdicke von 0,8 mm oder 1,2 mm gebildet, so dass der Fügeflansch 111 eine Dicke von 1,6 mm bzw. 2,4 mm aufweist. Durch die am Fügeflansch 111 geschaffene doppelte Blechdicke können die Schweißpunkte 150, trotz des originär dünnen Blechmaterials, hohe Kräfte übertragen, ohne dass dies mit nennenswertem Mehrgewicht einhergeht. Unter Umständen kann gegenüber anderen Lösungen (wie bspw. bei Einsatz einer Welded Tailored Blank, bei der für den Bodenbereich ein niedrigfestes aber gut umformbares Stahlblech und für den Fügeflansch ein hochfestes Stahlblech, gegebenenfalls mit zusätzlich höherer Blechdicke, verwendet wird) sogar eine Gewichtsersparnis erzielt werden.

Der durch den nach innen umgeschlagenen Rand 112 gebildete Fügeflansch 111 weist eine Breite bzw. Tiefe B von bspw. 30 mm bis 40 mm auf. Der nach innen bzw. in Richtung des Innenverstärkungsteils 140 umgeschlagene Rand 112 befindet sich sozusagen in einer Fügezone zwischen den gefügten Bauteilen 110 und 140 und wird dadurch in Form und Position gehalten. Insbesondere wird dadurch auch ein Aufklappen des Fügeflanschs 111 verhindert. Die Schweißpunkte 150 weisen zur Biege- bzw. Falzkante 113 einen Abstand A von nicht mehr als 10 mm auf. Das Bodenblech 110 kann im Übrigen mehrere derart ausgebildete Fügeflansche aufweisen.

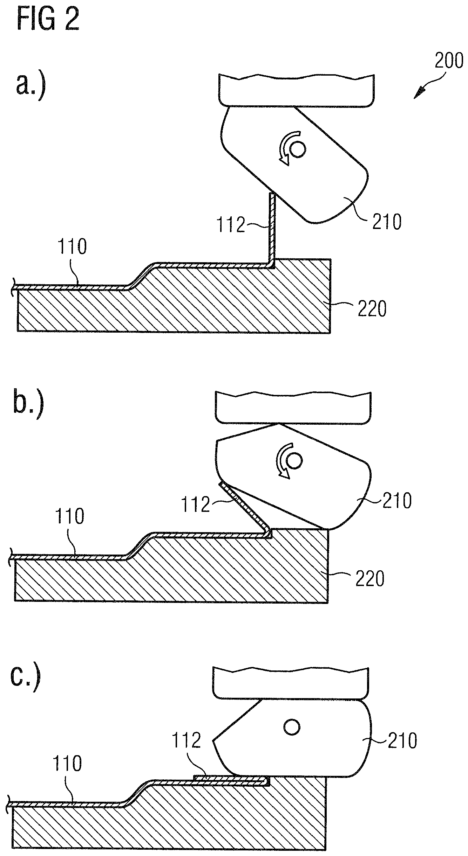

Das eine räumliche Formgebung aufweisende Bodenblech 110 wird ausgehend von einer ebenen Stahlblechplatine vollständig in einer Pressenstraße oder dergleichen hergestellt. Hierbei wird der umzuschlagende Rand 112 zunächst aufgestellt bzw. aufgerichtet und dann umgelegt. Das Umlegen erfolgt in einem Pressenwerkzeug 200, welches hierzu mit wenigstens einem im Werkzeugoberteil (oder gegebenenfalls auch im Werkzeugunterteil) angeordneten Drehschieber 210 ausgebildet ist. Der Ablauf ist in den Figuren 2a, 2b und 2c veranschaulicht. Der Umschlag wird innerhalb eines Pressenhubs mit möglichst kleinem Kanten- bzw. Biegeradius an der Biegekante 113 erzeugt. Mit 220 ist eine zum Werkzeugunterteil gehörende Werkstückauflage bezeichnet. Im Pressenwerkzeug 200 können gleichzeitig Umform- und/oder Schnittoperationen durchgeführt werden.

### Bezugszeichenliste

- 100: Bauteilverbund
- 110: Bodenblech
- 111: Fügeflansch
- 112: Rand
- 113: Biegekante
- 120: Schweller
- 130: Außenteil
- 140: Innenverstärkungsteil
- 150: Schweißpunkt(e)
- 200: Pressenwerkzeug
- 210: Drehschieber
- 220: Werkstückauflage
- A: Abstand
- B: Breite

## Patentansprüche

1. Verbindungsanordnung von zwei Karosseriebauteilen (110, 140), bei welcher das erste Karosseriebauteil (110) als Blechbauteil mit einem Fügeflansch (111) ausgebildet und an diesem Fügeflansch (111) mit dem zweiten Karosseriebauteil (140) mittels Schweißverbindung verbunden ist,
wobei der Fügeflansch (111) am ersten Karosseriebauteil (110) einen umgeschlagenen Rand (112) mit aufeinanderliegenden Blechlagen aufweist und mit doppelter Blechdicke ausgebildet ist, **dadurch gekennzeichnet, dass** es sich bei der Schweißverbindung um eine Punktschweißverbindung mit mehreren Schweißpunkten (150) handelt, wobei die Schweißpunkte (150) beide aufeinanderliegenden Blechlagen des Fügeflanschs (111) durchdringen.

2. Verbindungsanordnung nach Anspruch 1,
**dadurch gekennzeichnet, dass**
das erste Karosseriebauteil (110) eine im Wesentlichen gleichmäßige Blechdicke von nicht mehr als 1,2 mm, bevorzugt von nicht mehr als 1,0 mm und insbesondere von nicht mehr als 0,8 mm aufweist.

3. Verbindungsanordnung nach einem der vorausgehenden Ansprüche,
**dadurch gekennzeichnet, dass**
das erste Karosseriebauteil (110) einstückig hergestellt ist.

4. Verbindungsanordnung nach einem der vorausgehenden Ansprüche,
**dadurch gekennzeichnet, dass**
am ersten Karosseriebauteil (110) der durch den umgeschlagenen Rand (112) gebildete Fügeflansch (111) eine Breite (B) von 20 mm bis 50 mm und insbesondere von 30 mm bis 40 mm aufweist.

5. Verbindungsanordnung nach einem der vorausgehenden Ansprüche,
**dadurch gekennzeichnet, dass**
die Schweißpunkte (150) nicht mehr als 10 mm entfernt von einer Biegekante (113) des umgeschlagenen Rands (112) am ersten Karosseriebauteil (110) ausgebildet sind.

6. Verbindungsanordnung nach einem der vorausgehenden Ansprüche,
**dadurch gekennzeichnet, dass**
am ersten Karosseriebauteil (110) der Rand (112) nach innen umgeschlagen ist.

7. Verbindungsanordnung nach einem der vorausgehenden Ansprüche,
**dadurch gekennzeichnet, dass**
die im Fügeflansch (111) des ersten Karosseriebauteils (110) aufeinanderliegenden Blechlagen zusätzlich miteinander verklebt sind.

8. Verbindungsanordnung nach einem der vorausgehenden Ansprüche,
**dadurch gekennzeichnet, dass**
es sich bei dem ersten Karosseriebauteil (110) um ein Bodenblech und bei dem zweiten Karosseriebauteil (140) um einen Schweller (120) handelt.

## Claims

1. A connection arrangement for two vehicle body components (110, 140), in which the first body component (110) is formed as a sheet-metal component with a joining flange (111) and is connected at this joining flange (111) to the second body component (140) by means of a welded connection, wherein the joining flange (111) on the first body component (110) has a turned-over edge (112) with sheet-metal layers which lie on one another and is formed with a double sheet thickness, **characterised in that** the welded connection is a spot-welded connection with a plurality of welding spots (150), the welding spots (150) penetrating both sheet-metal layers of the joining flange (111) which lie on one another.

2. A connection arrangement according to Claim 1,
**characterised in that**
the first body component (110) has a substantially uniform sheet thickness of no more than 1.2 mm, preferably of no more than 1.0 mm, and especially of no more than 0.8 mm.

3. A connection arrangement according to one of the preceding claims,
**characterised in that**
the first body component (110) is produced in one piece.

4. A connection arrangement according to one of the preceding claims,
**characterised in that**
the joining flange (111) formed by the turned-over edge (112) has a width (B) of 20 mm to 50 mm, and especially of 30 mm to 40 mm, on the first body component (110).

5. A connection arrangement according to one of the preceding claims,
**characterised in that**
the welding spots (150) are formed no more than 10 mm away from a bent edge (113) of the turned-over edge (112) on the first body component (110).

6. A connection arrangement according to one of the preceding claims,
**characterised in that**
the edge (112) is turned over inwards on the first body component (110).

7. A connection arrangement according to one of the preceding claims,
**characterised in that**
the sheet-metal layers which lie on one another in the joining flange (111) of the first body component (110) are additionally adhesively joined together.

8. A connection arrangement according to one of the preceding claims,
**characterised in that**
the first body component (110) is a floorpan and the second body component (140) is a sill (120).

## Revendications

1. Dispositif de liaison de deux composants de carrosserie (110, 140) selon lequel le premier composant de carrosserie (110) est réalisé sous la forme d'un composant en tôle ayant une bride d'assemblage (111) et est relié sur cette bride d'assemblage (111) avec le second composant de carrosserie (140) par une liaison par soudure,
selon lequel :
la bride d'assemblage (111) située sur le premier composant de carrosserie (110) comporte un bord rabattu (112) ayant des couches de tôle superposées, et réalisées avec une épaisseur de tôle double,
**caractérisé en ce que**
la liaison de soudure consiste en une liaison de soudure par points comprenant plusieurs points de soudure (150), les points de soudure (150) traversant les deux couches de tôle superposées de la bride d'assemblage (111).

2. Dispositif de liaison conforme à la revendication 1,
**caractérisé en ce que**
le premier composant de carrosserie (110) a une épaisseur de tôle essentiellement uniforme non supérieure à 1,2 mm, de préférence non supérieure à 1,0 mm et de façon particulièrement préférentielle non supérieure à 0,8 mm.

3. Dispositif de liaison conforme à la revendication précédente,
**caractérisé en ce que**
le premier composant de carrosserie (110) est réalisé en une seule pièce.

4. Dispositif de liaison conforme à l'une des revendications précédentes,
**caractérisé en ce que**
la bride d'assemblage (111) formée par le bord rabattu (112) sur le premier composant de carrosserie (110) a une largeur (B) de 20 mm à 50 mm et en particulier de 30 mm à 40 mm.

5. Dispositif de liaison conforme à l'une des revendications précédentes,
**caractérisé en ce que**
les points de soudure (150) formés sur le premier composant de carrosserie (110) ne sont pas éloignés de plus de 10 mm de l'arête de pliage (113) du bord rabattu (112).

6. Dispositif de liaison conforme à l'une des revendications précédentes,
**caractérisé en ce que**
le bord (112) situé sur le premier composant de carrosserie (110) est rabattu vers l'intérieur.

7. Dispositif de liaison conforme à l'une des revendications précédentes,
**caractérisé en ce que**
les couches de tôle superposées dans la bride d'assemblage (111) du premier composant de carrosserie (110) sont en outre collées les unes aux autres.

8. Dispositif de liaison conforme à l'une des revendications précédentes,
**caractérisé en ce que**
le premier composant de carrosserie (110) est une tôle de plancher et le second composant de carrosserie (140) est un seuil de porte (120).
